(19) Europäisches Patentamt
European Patent Office
Office européen des brevets

(11) **EP 3 636 827 B1**

(12) **EUROPEAN PATENT SPECIFICATION**

(45) Date of publication and mention
of the grant of the patent:
**10.05.2023 Bulletin 2023/19**

(21) Application number: **18824724.1**

(22) Date of filing: **29.06.2018**

(51) International Patent Classification (IPC):
**D06M 15/564** (2006.01)     **D03D 15/00** (2021.01)
**D06M 101/34** (2006.01)     **D01F 6/60** (2006.01)
**D01D 5/096** (2006.01)     **D01F 11/08** (2006.01)
**B29B 15/12** (2006.01)     **D03D 15/283** (2021.01)
**D06M 15/568** (2006.01)     **D06M 101/36** (2006.01)
**D06M 15/53** (2006.01)     **D01D 5/06** (2006.01)

(52) Cooperative Patent Classification (CPC):
**D06M 15/53; B29B 15/125; D01D 5/06;**
**D01F 6/605; D01F 11/08; D03D 15/283;**
**D06M 15/564; D06M 15/568;** D06M 2101/36;
D06M 2200/40; D10B 2331/021; D10B 2331/10

(86) International application number:
**PCT/KR2018/007426**

(87) International publication number:
**WO 2019/004789 (03.01.2019 Gazette 2019/01)**

(54) **ARAMID YARN HAVING EXCELLENT ADHESIVENESS WITH POLYURETHANE MATRIX RESIN, METHOD FOR PRODUCING SAME, AND ARAMID YARN PRODUCED THEREBY**

ARAMIDGARN MIT HERVORRAGENDER HAFTUNG MIT POLYURETHAN-MATRIXHARZ, HERSTELLUNGSVERFAHREN DAFÜR UND DAMIT HERGESTELLTES ARAMIDGARN

FIL D'ARAMIDE AYANT UNE EXCELLENTE ADHÉRENCE À UNE RÉSINE DE MATRICE POLYURÉTHANE, SON PROCÉDÉ DE PRODUCTION ET FIL D'ARAMIDE AINSI OBTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2017 KR 20170082304**

(43) Date of publication of application:
**15.04.2020 Bulletin 2020/16**

(73) Proprietor: **Kolon Industries, Inc.**
**Seoul 07793 (KR)**

(72) Inventors:
• **YANG, Ji Eun**
**Seoul 07793 (KR)**
• **PARK, Hyun Jung**
**Seoul 07793 (KR)**
• **YOON, Sang Jun**
**Seoul 07793 (KR)**

(74) Representative: **Ter Meer Steinmeister & Partner Patentanwälte mbB**
**Nymphenburger Straße 4**
**80335 München (DE)**

(56) References cited:
**GB-A- 1 438 067**     **JP-A- 2014 521 796**
**KR-A- 20100 065 356**     **KR-A- 20170 069 747**
**KR-B1- 101 434 221**     **KR-B1- 101 551 348**
**US-A- 3 956 447**     **US-A- 4 034 138**
**US-A- 4 720 398**

• **DATABASE WPI Week 201270 Thomson Scientific, London, GB; AN 2012-M98040 XP002802003, & JP 2012 193480 A (TEIJIN TECHNO PROD KK) 11 October 2012 (2012-10-11)**

## Description

## [TECHNICAL FIELD]

The present invention relates to an aramid yarn having excellent adhesive properties with a polyurethane matrix resin, a method for producing the same, and an aramid fabric produced therefrom. More particularly, the present invention relates to an aramid yarn which has an excellent wetting property with a polyurethane matrix resin, can improve adhesive properties between polyurethane matrix resins when used as a reinforcing fiber for a fiber/resin composite material, and thus is useful as refrigerator insulation materials, automotive component materials, and electronic component materials, a method for producing the same, and an aramid fabric produced therefrom.

## [BACKGROUND ART]

US4034138A, US4720398 and JP2012193480 relate to the treatment of aramid yarns with polyurethane sizing compositions.

As a heat-insulating material for electronic products such as refrigerators, a heat-insulating material in which a ceramic material adheres to a composite material composed of reinforcing fiber material and polyurethane matrix resin has been widely used.

The reinforcing fiber material is used in the form of yarn, and is also used in the form of a fabric woven from the yarn.

In prior arts, glass fiber has been used as the reinforcing fiber material, but there were problems that the glass fiber has a high specific gravity, which makes it difficult to reduce the weight and is harmful to the human body.

In another prior art, carbon fiber has been used instead of glass fiber as the reinforcing fiber material, but there were problems that the carbon fiber has high specific stiffness and thus causes deterioration in processability and impact resistance.

In yet another prior art, aramid yarn or plain weave aramid fabric was used as the reinforcing fiber material, but there was a problem that adhesive properties between aramid yarn or plain weave aramid fabrics and polyurethane matrix resins are decreased and that the plain weave aramid fabric has a dense structure and thus a poor wetting property with the polyurethane matrix resin.

## [DETAILED DESCRIPTION OF THE INVENTION]

## [Technical Problem]

It is an object of the present invention to provide an aramid yarn and an aramid fabric which can improve adhesive properties between polyurethane matrix resins when used as a reinforcing fiber at the time of producing a composite material composed of a reinforcing fiber and a polyurethane matrix resin and thus are useful as refrigerator insulation materials, automotive component materials, electronic component materials, and the like.

## [Technical Solution]

In one embodiment of the present invention, in order to enable an aramid yarn, which is a reinforcing fiber of the composite material, to adhere well to a polyurethane resin, which is a matrix resin of the composite material, while adhering and impregnating the polyurethane resin to the surface and inside of the aramid yarn, the adhesion and impregnation amount of the polyurethane resin is adjusted to 1.5 to 7.0 % by weight based on the sum of the weight of the polyurethane resin adhered and impregnated to the surface and inside of the aramid yarn plus the weight of the aramid yarn before the polyurethane resin is adhered and impregnated. An aramid yarn having excellent properties with a polyurethane is thus obtained, as defined in claim 1.

## [ADVANTAGEOUS EFFECTS]

The aramid yarn according to the present invention is excellent in adhesive properties with the polyurethane matrix resin when used as a reinforcing fiber for a fiber/resin composite material due to a sizing agent composition adhered and impregnated to the surface and inside of the aramid yarn.

In the present invention, since the sizing agent composition can be adhered and impregnated to the aramid yarn during a spinning step of producing the aramid yarn, a separate step of adhering the sizing agent composition can be omitted.

Moreover, since the aramid fabric according to the present invention is woven into a basket-weave structure and thus has low denseness, the wetting property with the polyurethane matrix resin impregnated into the aramid fabric is improved, and consequently, the adhesive properties between the aramid fabric and the polyurethane matrix resin are improved.

The present invention is useful as a refrigerator insulation material, an automotive component material, an electronic component material, and the like.

## [BRIEF DESCRIPTION OF THE DRAWINGS]

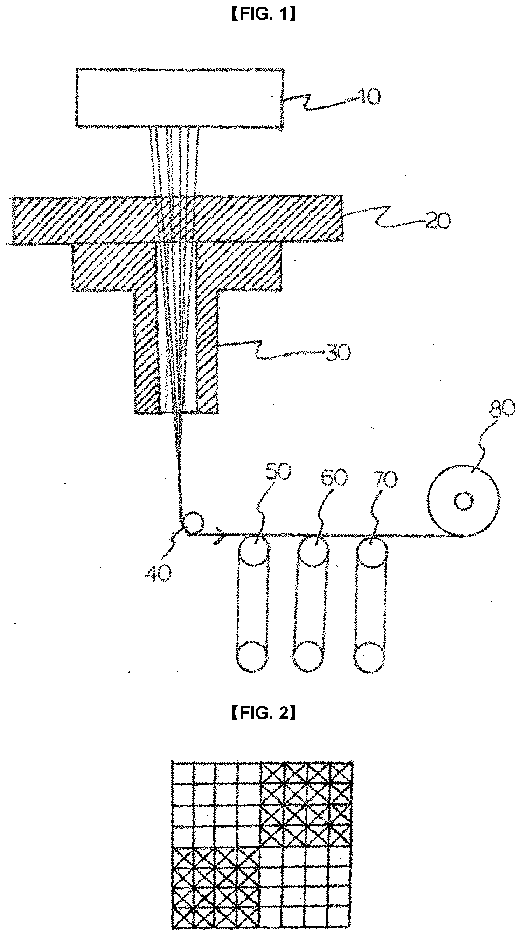

FIG. 1 is a process schematic diagram of producing the aramid yarn according to the present invention. FIG. 2 is a weave structure of an example of the aramid fabric according to the present invention.

## [DETAILED DESCRIPTION OF THE EMBODIMENTS]

Hereinafter, embodiments of the present invention will be described in more detail with reference to the accompanying drawings.

The aramid yarn according to the present invention is characterized in that a polyurethane resin according to claim 1 is adhered and impregnated to the surface and inside of the aramid yarn, and the content of the polyurethane resin is 1.5 to 7.0 % by weight based on the sum of the weight of the polyurethane resin adhered and impregnated to the surface and inside of the aramid yarn plus the weight of the aramid yarn before the polyurethane resin is adhered and impregnated.

The content of the polyurethane resin adhered and impregnated to the surface and inside of the aramid yarn is 1.5 to 7.0 % by weight, preferably 2 to 5 % by weight, more preferably 3 to 5 % by weight, based on the sum of the weight of the polyurethane resin adhered and impregnated to the surface and inside of the aramid yarn plus the weight of the aramid yarn before the polyurethane resin is adhered and impregnated. Within these content ranges, it is desirable to maintain the intrinsic physical properties of the aramid yarn as they are and improve the production process while improving the adhesive properties with the polyurethane matrix resin.

The polyurethane resin is a reaction product of polytetramethylene ether glycol and isophorone diisocyanate.

As shown in FIG. 1, the method for producing an aramid yarn according to the present invention is characterized in that, during continuous processes of producing an aramid yarn by spinning, coagulating, washing, drying, and heat-treating an aramid spinning dope containing an aramid resin and a solvent, while adhering and impregnating a sizing agent composition composed of 35 to 45 % by weight of a polyurethane resin, 2 to 5 % by weight of an organic solvent, and 55 to 63 % by weight of water to the surface and inside of the aramid yarn, the content of the polyurethane resin adhered and impregnated to the surface and inside of the aramid yarn is adjusted to 1.5 to 7.0 % by weight based on the sum of the weight of the polyurethane resin adhered and impregnated to the surface and inside of the aramid yarn plus the weight of the aramid yarn before polyurethane resin is adhered and impregnated.

The sizing agent composition is composed of 35 to 45 % by weight of a polyurethane resin, 2 to 5 % by weight of an organic solvent, and 55 to 63 % by weight of water, in order to improve adhesive properties with the polyurethane matrix resin.

As one example of the sizing agent composition, a sizing agent composition composed of 35 to 45 % by weight of polyurethane, which is a reaction product of polytetramethylene ether glycol and isophorone diisocyanate, 2 to 5 % by weight of N-methyl pyrrolidone, and 55 to 63 % by weight of deionized water may be used.

As another example, during the process of spinning an aramid yarn by extruding an aramid spinning dope in the form of monofilaments through spinneret holes and then converging the extruded monofilaments in the form of a multifilament with a converging roller, a sizing agent composition is supplied to the surface of a converging roller 40 to adhere and impregnate the sizing agent composition to the surface and inside of the aramid yarn that is converged in the form of multifilament.

As shown in FIG. 1, the aramid yarn is typically produced by a method including the steps of extruding an aramid spinning dope in the form of monofilaments through the extruding holes formed in a spinneret 10, passing the extruded monofilaments through a coagulation bath 20 and a coagulation jet tube 30 in this order, converging the monofilaments in the form of a multifilament by a converging roller 40, subsequently subjecting to washing, drying, and heat treatment while passing through a washing roller 50, a drying roller 60, and a heat treatment roller 70, and winding the resultant yarn by a take-up roller 80.

In the present invention, when producing the aramid yarn by the above-mentioned method, the sizing agent composition is supplied to the surface of the converging roller 40, and the sizing agent composition is adhered and impregnated to the surface and inside of the aramid yarn.

The content of the polyurethane resin which is adhered and impregnated to the surface and inside of the aramid yarn is adjusted to 1.5 to 7.0 % by weight, preferably 2 to 5 % by weight, more preferably 3 to 5 % by weight, based on the sum of the weight of the polyurethane resin adhered and impregnated to the surface and inside of the aramid yarn plus the weight of the aramid yarn before the polyurethane resin is adhered and impregnated.

When the content of the polyurethane resin is less than 1.5 % by weight, the effect of improving the adhesive properties with the polyurethane matrix resin is weakened. When the content of the polyurethane resin is greater than 7.0 % by weight, spinning and weaving process properties are deteriorated, the yarn may become stiff, and the physical properties may be deteriorated.

In the present invention, since the sizing agent composition is adhered/impregnated to the aramid yarn during a continuous process of producing an aramid yarn, preferably during the spinning step, it is not necessary to perform a separate step of adhering the sizing agent composition after the production of the aramid yarn.

An aramid fabric according to the present invention is characterized in that a warp and a weft are composed of aramid yarn wherein a polyurethane resin is adhered and impregnated to the surface and inside of the aramid yarn, and the content of the polyurethane resin is 1.5 to 7.0 % by weight based on the sum of the weight of the polyurethane resin adhered and impregnated to the surface and inside of the aramid yarn plus the weight of the aramid yarn before the polyurethane resin is adhered and impregnated.

It is desirable that the warp and the weft are woven into a basket-weave structure to improve the wetting property of the aramid fabric to the polyurethane matrix resin.

As an example of the basket-weave structure, a 4 × 4 basket-weave structure or the like as shown in FIG. 2 can be used.

The fineness of each of the warp and the weft is $111.1 \cdot 10^{-3}$ to $333.3 \cdot 10^{-3}$ kg/m (1000 to 3000 denier), and the warp density and the weft density are preferably 10 to 20 ends per 2.54 cm (epi(end per inch)) respectively, to appropriately reinforce the physical properties of the composite material and the final electronic insulation component.

The aramid yarn according to the present invention is excellent in adhesive properties with the polyurethane matrix resin when used as a reinforcing fiber for a fiber/resin composite material due to a polyurethane resin adhered or impregnated to the surface and inside of the aramid yarn.

In the present invention, since the sizing agent composition composed of a polyurethane resin, an organic solvent, and water can be adhered and impregnated to the aramid yarn during the spinning step of producing the aramid yarn, a separate step of adhering the sizing agent composition can be omitted.

Moreover, since the aramid fabric according to the present invention is woven into a basket-weave structure and has low denseness, the wetting property with the polyurethane matrix resin impregnated into the aramid fabric is improved, and consequently, the adhesive properties between the aramid fabric and the polyurethane matrix resin are improved.

The present invention is useful as a refrigerator insulation material, an automotive component material, an electronic component material, and the like.

Hereinafter, the present invention will be described in more detail with reference to examples and comparative examples.

The following examples are preferred embodiments of the present invention and the protection scope of the present invention is not limited only thereto.

Example 1

As shown in FIG. 1, a sizing agent composition composed of 36 wt% of polyurethane, which is a reaction product of polytetramethylene ether glycol and isophorone diisocyanate, 4 wt% of N-methyl pyrrolidone, and 60 wt% of deionized water was supplied onto the surface of the converging roller for converging aramid monofilaments in the form of a multifilament when spinning an aramid yarn. While adhering/impregnating the sizing agent composition to the aramid yarn passing through the converging roller, the content of the polyurethane resin adhered and impregnated to the surface and inside of the aramid yarn was adjusted to 3 wt% based on the sum of the weight of the polyurethane resin adhered and impregnated to the surface and inside of the aramid yarn plus the weight of the aramid yarn before the polyurethane resin was adhered and impregnated. Thereby, 3000 denier aramid yarn was produced.

Next, the aramid yarn adhered and impregnated with the polyurethane resin as described above was used as a warp and a weft to weave an aramid fabric into a 4 × 4 basket-weave structure.

At this time, the warp density and the weft density were set to 13 epi(end per inch), respectively.

The aramid fabric woven as described above was impregnated with a polyurethane resin (matrix resin) to produce a reinforcing material for heat insulation.

At this time, the impregnation amount of the polyurethane resin (matrix resin) was 35 wt% based on the sum of the reinforcing material for heat insulation.

The breaking strength of the reinforcing material for heat insulation produced as described above was measured in accordance with ASTM Test Method D 3039, and as a result, it exhibited excellent breaking strength of 980 MPa.

Reference example 2 (content of water too low)

As shown in FIG. 1, a sizing agent composition composed of 42 wt% of polyurethane, which is a reaction product of polytetramethylene ether glycol and isophorone diisocyanate, 4 wt% of N-methyl pyrrolidone, and 54 wt% of deionized water, was supplied onto the surface of the converging roller for converging aramid monofilaments in the form of a multifilament when spinning an aramid yarn. While adhering/impregnating the sizing agent composition to the aramid yarn passing through the converging roller, the content of the polyurethane resin adhered and impregnated to the surface and inside of the aramid yarn was adjusted to 5 wt% based on the sum of the weight of the polyurethane resin adhered and impregnated to the surface and inside of the aramid yarn plus the weight of the aramid yarn before the polyurethane resin was adhered and impregnated. Thereby, 1500 denier aramid yarn was produced.

Next, the aramid yarn adhered and impregnated with the polyurethane resin as described above was used as a warp and a weft to weave an aramid fabric into a 4 × 4 basket-weave structure.

At this time, the warp density and the weft density were set to 20 epi(end per inch), respectively.

The aramid fabric woven as described above was impregnated with a polyurethane resin (matrix resin) to produce a reinforcing material for heat insulation.

At this time, the impregnation amount of the polyurethane resin (matrix resin) was 35 wt% based on the sum of the reinforcing material for heat insulation.

The breaking strength of the reinforcing material for heat insulation prepared as described above was measured in accordance with ASTM Test Method D 3039 and as a result, it exhibited an excellent breaking strength of 972 MPa.

Comparative Example 1

3000 denier aramid yarn was dipped into a bath containing a sizing agent composition composed of 20 wt% of polyurethane, which is a reaction product of polytetramethylene ether glycol and isophorone diisocyanate, and 4 wt% of N-methyl pyrrolidone and 76 wt% of deionized water. Then, while squeezing the dipped yarn with a roller squeegee, the content of the polyurethane resin adhered and impregnated to the surface and inside of the aramid yarn was adjusted to 1 wt% based on the sum of the weight of the polyurethane resin adhered and impregnated to the surface and inside of the aramid yarn plus the weight of the aramid yarn before polyurethane resin was adhered and impregnated. Thereby, 3000 denier aramid yarn was produced.

Next, the aramid yarn adhered and impregnated with the polyurethane resin as described above was used as a warp and a weft to weave an aramid fabric into a plain weave structure.

At this time, the warp density and the weft density were set to 13 epi(end per inch), respectively.

The aramid fabric woven as described above was impregnated with a polyurethane resin (matrix resin) to produce a reinforcing material for heat insulation.

At this time, the impregnation amount of the polyurethane resin (matrix resin) was 35 wt% based on the sum of the reinforcing material for heat insulation.

The breaking strength of the reinforcing material for heat insulation produced as described above was measured in accordance with ASTM Test Method D 3039, and as a result, it exhibited inferior breaking strength of 760 MPa .

Comparative Example 2

An aramid yarn, an aramid fabric, and a reinforcing material for heat insulation, which were impregnated and adhered with a polyurethane resin, were produced in the same manner as in Example 1, except that in Example 1, the content of the polyurethane resin adhered and impregnated to the surface and inside of the aramid yarn was changed to 7.5 % by weight based on the sum of the weight of the polyurethane resin adhered and impregnated to the surface and inside of the aramid yarn plus the weight of the aramid yarn before the polyurethane resin was adhered and impregnated.

The breaking strength of the reinforcing material for heat insulation produced as described above was measured in accordance with ASTM Test Method D 3039, and as a result, it exhibited inferior breaking strength of 820 MPa.

Comparative Example 3

An aramid fabric was woven into a plain weave structure by using 3000 denier aramid fibers not treated with a sizing agent composition as a warp and a weft.

The warp density and the weft density were set to 13 epi(end per inch), respectively.

The aramid fabric woven as described above was impregnated with a polyurethane resin (matrix resin) to produce a reinforcing material for heat insulation.

The content of the polyurethane resin (matrix resin) was adjusted to 35 % by weight based on the sum of the reinforcing material for heat insulation.

The breaking strength of the reinforcing material for heat insulation produced as described above was measured in accordance with ASTM Test Method D 3039, and as a result, it exhibited inferior breaking strength of 780 MPa.

In the present invention, the content (wt%) of the polyurethane resin adhered and impregnated to the aramid yarn was measured by the following method.

First, 2.5 g of an aramid yarn (hereinafter referred to as "sample") in which an organic solvent and water in the sizing agent components were volatilized and only a polyurethane resin was adhered and impregnated to the surface and inside of the aramid yarn was prepared. Then, the sample was inserted into a syringe-shaped cylindrical tube, to which about 8 ml of methanol was added so that the sample was sufficiently wetted, and then pressure was repeatedly applied to the tube until no more solvent was released.

Next, the operation of adding about 8 ml of methanol to the tube again and repeatedly applying pressure to the tube until no more solvent was released was further repeated two times. Then, the sample was removed from the tube and dried at 110 °C to measure the weight (WO) of the aramid yarn in which the polyurethane resin was not adhered and impregnated to the surface and inside.

Next, the weight of the aramid yarn (W1: sample weight) in which only the polyurethane resin in the sizing agent composition was adhered and impregnated to the surface and inside and the weight (WO) of the aramid yarn in which the polyurethane resin in the sizing agent composition was not adhered and impregnated to the surface and inside were substituted into the following equation to determine the content (W) of the polyurethane resin adhered and impregnated to the surface and inside of the aramid fiber.

$$W = \left( \frac{W1 - W0}{W1} \right) \times 100$$

[Industrial Applicability]

**[INDUSTRIAL APPLICABILITY]**

According the present invention, a composite material which is composed of reinforcing fibers and polyurethane matrix resins and is thus useful as a heat-insulating material for electronic products is used as a reinforcing fiber material that improves adhesive properties between the reinforcing fiber and the polyurethane matrix resins.

**Claims**

1. An aramid yarn having excellent adhesive properties with a polyurethane matrix resin **characterized in that**

   a sizing agent composition is adhered and impregnated to the surface and inside of the aramid yarn,
   wherein the sizing agent composition is composed of 35 to 45 % by weight of a polyurethane resin, 2 to 5 % by weight of an organic solvent, and 55 to 63 % by weight of water,
   wherein the polyurethane resin is a reaction product of polytetramethylene ether glycol and isophorone diisocyanate, and
   wherein the content of the polyurethane resin, as measured by the method in the description, is 1.5 to 7.0 % by weight based on the sum of the weight of the polyurethane resin adhered and impregnated to the surface and inside of the aramid yarn plus the weight of the aramid yarn before the polyurethane resin is adhered and impregnated.

2. The aramid yarn having excellent adhesive properties with a polyurethane matrix resin according to claim 1 **characterized in that** the aramid yarn is in the form of a multifilament consisting of a plurality of monofilaments.

3. A method for producing an aramid yarn having excellent adhesive properties with a polyurethane matrix resin **characterized in that**, during continuous processes of producing an aramid yarn by spinning, coagulating, washing, drying, and heat-treating an aramid spinning dope containing an aramid resin and a solvent, while adhering and impregnating a sizing agent composition composed of a polyurethane resin, an organic solvent, and water to the surface and inside of the aramid yarn, the content of the polyurethane resin adhered and impregnated to the surface and inside of the aramid yarn, as measured by the method in the description, is adjusted to 1.5 to 7.0 % by weight based on the sum of the weight of the polyurethane resin adhered and impregnated to the surface and inside of the aramid yarn plus the weight of the aramid yarn before the polyurethane resin is adhered and impregnated,

   wherein the sizing agent composition is composed of 35 to 45 % by weight of a polyurethane resin, 2 to 5 % by weight of an organic solvent, and 55 to 63 % by weight of water and wherein the polyurethane resin is a reaction product of polytetramethylene ether glycol and isophorone diisocyanate.

4. The method for producing an aramid yarn having excellent adhesive properties with a polyurethane matrix resin according to claim 3, **characterized in that**, during the process of spinning the aramid yarn by extruding an aramid spinning dope in the form of monofilaments through spinneret holes and then converging the extruded monofilaments in the form of a multifilament with a converging roller, a sizing agent composition is supplied to the surface of the converging roller to adhere and impregnate the sizing agent composition to the surface and inside of the aramid yarn that is converged in the form of multifilament.

5. The method for producing an aramid yarn having excellent adhesive properties with a polyurethane matrix resin according to claim 3, **characterized in that** the water is deionized water.

6. An aramid fabric having excellent adhesive properties with a polyurethane matrix resin **characterized in that** a warp and a weft are composed of aramid yarn, wherein a sizing agent composition is adhered and impregnated to the surface and inside the aramid yarn,

   wherein the sizing agent composition is composed of 35 to 45 % by weight of a polyurethane resin, 2 to 5 % by weight of an organic solvent, and 55 to 63 % by weight of water,
   wherein the polyurethane resin is a reaction product of polytetramethylene ether glycol and isophorone diisocyanate, and
   wherein the content of the polyurethane resin is 1.5 to 7.0 % by weight based on the sum of the weight of the polyurethane resin adhered and impregnated to the surface and inside of the aramid yarn plus the weight of the aramid yarn before the polyurethane resin is adhered and impregnated.

7. The aramid fabric having excellent adhesive properties with a polyurethane matrix resin according to claim 6, **characterized in that** the warp and the weft are woven into a basket-weave structure.

8. The aramid fabric having excellent adhesive properties with a polyurethane matrix resin according to claim 6, **characterized in that** the fineness of each of the warp and the weft is $111.1 \cdot 10^{-3}$ to $333.3 \cdot 10^{-3}$ kg/m (1000 to 3000 denier), and the density of each of the warp and the weft is 10 to 20 ends per 2.54 cm (epi(end per inch)).

**Patentansprüche**

1. Aramidgarn mit ausgezeichneten Hafteigenschaften mit einem Polyurethan-Matrixharz, **dadurch gekennzeichnet, dass**

   eine Schlichtemittelzusammensetzung an der Oberfläche und im Inneren des Aramidgarns haftet und imprägniert ist,
   wobei die Schlichtemittelzusammensetzung aus 35 bis 45 Gew.-% eines Polyurethanharzes, 2 bis 5 Gew.-% eines organischen Lösungsmittels und 55 bis 63 Gew.-% Wasser besteht,
   wobei das Polyurethanharz ein Reaktionsprodukt von Polytetramethylenetherglykol und Isophorondiisocyanat ist, und
   wobei der Gehalt des Polyurethanharzes, wie durch das Verfahren in der Beschreibung gemessen, 1,5 bis 7,0 Gew.-% beträgt, basierend auf der Summe des Gewichts des Polyurethanharzes, das an der Oberfläche und im Inneren des Aramidgarns haftet und imprägniert ist, plus des Gewichts des Aramidgarns, bevor das Polyurethanharz haftet und imprägniert ist.

2. Aramidgarn mit ausgezeichneten Hafteigenschaften mit einem Polyurethan-Matrixharz nach Anspruch 1, **dadurch gekennzeichnet, dass** das Aramidgarn in Form eines Multifilaments vorliegt, das aus einer Vielzahl von Monofilamenten besteht.

3. Verfahren zur Herstellung eines Aramidgarns mit ausgezeichneten Hafteigenschaften mit einem Polyurethan-Matrixharz, **dadurch gekennzeichnet, dass** während kontinuierlicher Prozesse der Herstellung eines Aramidgarns durch Spinnen, Koagulieren, Waschen, Trocknen und Wärmebehandeln einer Aramidspinnmasse, die ein Aramidharz und ein Lösungsmittel enthält, während des Anhaftens und Imprägnierens einer Schlichtemittelzusammensetzung, die aus einem Polyurethanharz, einem organischen Lösungsmittel und Wasser besteht, an der Oberfläche und im Inneren des Aramidgarns der Gehalt des an der Oberfläche und im Inneren des Aramidgarns haftenden und imprägnierten Polyurethanharzes, wie durch das Verfahren in der Beschreibung gemessen, auf 1,5 bis 7,0 Gew.-%, bezogen auf die Summe des Gewichts des an der Oberfläche und im Inneren des Aramidgarns haftenden und imprägnierten Polyurethanharzes plus des Gewichts des Aramidgarns vor dem Haften und Imprägnieren des Polyurethanharzes, eingestellt wird,

   wobei die Schlichtemittelzusammensetzung aus 35 bis 45 Gew.-% eines Polyurethanharzes, 2 bis 5 Gew.-% eines organischen Lösungsmittels und 55 bis 63 Gew.-% Wasser besteht und wobei das Polyurethanharz ein Reaktionsprodukt von Polytetramethylenetherglykol und Isophorondiisocyanat ist.

4. Verfahren zur Herstellung eines Aramidgarns mit ausgezeichneten Hafteigenschaften mit einem Polyurethanmatrixharz nach Anspruch 3, **dadurch gekennzeichnet, dass** während des Spinnprozesses des Aramidgarns durch Extrudieren einer Aramidspinnmasse in Form von Monofilamenten durch Spinndüsenlöcher und anschließendes Zusammenführen der extrudierten Monofilamente in Form eines Multifilaments mit einer Zusammenführwalze, eine Schlichtemittelzusammensetzung der Oberfläche der Konvergenzwalze zugeführt wird, um die Schlichtemittelzusammensetzung an der Oberfläche und im Inneren des Aramidgarns, das in Form eines Multifilaments konvergiert wird, haften zu lassen und zu imprägnieren.

5. Verfahren zur Herstellung eines Aramidgarns mit hervorragenden Hafteigenschaften mit einem Polyurethan-Matrixharz nach Anspruch 3, **dadurch gekennzeichnet, dass** das Wasser entionisiertes Wasser ist.

6. Aramidgewebe mit ausgezeichneten Hafteigenschaften mit einem PolyurethanMatrixharz, **dadurch gekennzeichnet, dass** eine Kette und ein Schuss aus Aramidgarn bestehen, wobei eine Schlichtemittelzusammensetzung an der Oberfläche und im Inneren des Aramidgarns haftet und imprägniert ist,

   wobei die Schlichtemittelzusammensetzung aus 35 bis 45 Gew.-% eines Polyurethanharzes, 2 bis 5 Gew.-% eines organischen Lösungsmittels und 55 bis 63 Gew.-% Wasser besteht,
   wobei das Polyurethanharz ein Reaktionsprodukt von Polytetramethylenetherglykol und Isophorondiisocyanat ist, und
   wobei der Gehalt des Polyurethanharzes 1,5 bis 7,0 Gew.-% beträgt, bezogen auf die Summe des Gewichts des an der Oberfläche und im Inneren des Aramidgarns haftenden und imprägnierten Polyurethanharzes plus des Gewichts des Aramidgarns vor dem Haften und Imprägnieren des Polyurethanharzes.

7. Aramidgewebe mit ausgezeichneten Hafteigenschaften mit einem PolyurethanMatrixharz nach Anspruch 6, **dadurch gekennzeichnet, dass** die Kette und der Schuss in einer Korbflechtstruktur gewebt sind.

8. Aramidgewebe mit ausgezeichneten Hafteigenschaften mit einem PolyurethanMatrixharz nach Anspruch 6, **dadurch gekennzeichnet, dass** die Feinheit von Kette und Schuss jeweils $111,1 \cdot 10^{-3}$ bis

333,3•10⁻³ kg/m (1000 bis 3000 Denier) und die Dichte von Kette und Schuss jeweils 10 bis 20 Enden pro 2,54 cm (epi ("end per inch")) beträgt.

**Revendications**

1. Fil d'aramide ayant d'excellentes propriétés d'adhérence avec une résine à matrice de polyuréthane, **caractérisé en ce que**

   une composition d'agent d'apprêtage adhère et est imprégnée à la surface et à l'intérieur du fil d'aramide,
   dans lequel la composition d'agent d'apprêtage est composée de 35 à 45 % en poids d'une résine de polyuréthane, de 2 à 5 % en poids d'un solvant organique et de 55 à 63 % en poids d'eau,
   dans lequel la résine de polyuréthane est un produit de réaction de polytétraméthylène éther glycol et d'isophorone diisocyanate, et
   dans lequel la teneur en résine de polyuréthane, lorsqu'elle est mesurée par le procédé de la description, est de 1,5 à 7,0 % en poids basé sur la somme du poids de la résine de polyuréthane adhérant et imprégnée à la surface et à l'intérieur du fil d'aramide, plus le poids du fil d'aramide avant que la résine de polyuréthane adhère et s'imprègne.

2. Fil d'aramide ayant d'excellentes propriétés d'adhérence avec une résine à matrice de polyuréthane selon la revendication 1, **caractérisé en ce que** le fil d'aramide a la forme d'un multifilament constitué d'une pluralité de monofilaments.

3. Procédé pour produire un fil d'aramide ayant d'excellentes propriétés d'adhérence avec une résine à matrice de polyuréthane, **caractérisé en ce que**, pendant des processus continus de production d'un fil d'aramide par filage, coagulation, lavage, séchage et traitement thermique d'une solution de filage d'aramide contenant une résine d'aramide et un solvant, tout en faisant adhérer et en imprégnant une composition d'agent d'apprêtage composée d'une résine de polyuréthane, d'un solvant organique et d'eau à la surface et à l'intérieur du fil d'aramide, la teneur en résine de polyuréthane adhérant et imprégnée à la surface et à l'intérieur du fil d'aramide, lorsqu'elle est mesurée par le procédé de la description, est ajustée à 1,5 à 7,0 % en poids basé sur la somme du poids de la résine de polyuréthane adhérant et imprégnée à la surface et à l'intérieur du fil d'aramide, plus le poids du fil d'aramide avant que la résine de polyuréthane adhère et s'imprègne,

   dans lequel la composition d'agent d'apprêtage est composée de 35 à 45 % en poids d'une résine de polyuréthane, de 2 à 5 % en poids d'un solvant organique et de 55 à 63 % en poids d'eau et
dans lequel la résine de polyuréthane est un produit de réaction de polytétraméthylène éther glycol et d'isophorone diisocyanate.

4. Procédé pour produire un fil d'aramide ayant d'excellentes propriétés d'adhérence avec une résine à matrice de polyuréthane selon la revendication 3, **caractérisé en ce que**, pendant le processus de filage du fil d'aramide en extrudant une solution de filage d'aramide sous la forme de monofilaments à travers des orifices de filière et en faisant ensuite converger les monofilaments extrudés sous la forme d'un multifilament avec un rouleau de convergence, une composition d'agent d'apprêtage est fournie à la surface du rouleau de convergence pour faire adhérer et imprégner la composition d'agent d'apprêtage à la surface et à l'intérieur du fil d'aramide qui converge sous la forme d'un multifilament.

5. Procédé pour produire un fil d'aramide ayant d'excellentes propriétés d'adhérence avec une résine à matrice de polyuréthane selon la revendication 3, **caractérisé en ce que** l'eau est de l'eau déionisée.

6. Tissu d'aramide ayant d'excellentes propriétés d'adhérence avec une résine à matrice de polyuréthane, **caractérisé en ce qu'**une chaîne et une trame sont composées de fil d'aramide, dans lequel une composition d'agent d'apprêtage adhère et s'imprègne à la surface et à l'intérieur du fil d'aramide,

   dans lequel la composition d'agent d'apprêtage est composée de 35 à 45 % en poids d'une résine de polyuréthane, de 2 à 5 % en poids d'un solvant organique et de 55 à 63 % en poids d'eau,
   dans lequel la résine de polyuréthane est un produit de réaction de polytétraméthylène éther glycol et d'isophorone diisocyanate, et
   dans lequel la teneur en résine de polyuréthane est de 1,5 à 7,0 % en poids basé sur la somme du poids de la résine de polyuréthane adhérant et imprégnée à la surface et à l'intérieur du fil d'aramide, plus le poids du fil d'aramide avant que la résine de polyuréthane adhère et s'imprègne.

7. Tissu d'aramide ayant d'excellentes propriétés d'adhérence avec une résine à matrice de polyuréthane selon la revendication 6, **caractérisé en ce que** la chaîne et la trame sont tissées en une structure nattée.

8. Tissu d'aramide ayant d'excellentes propriétés d'adhérence avec une résine à matrice de polyuréthane selon la revendication 6, **caractérisé en ce que** la finesse de chaque fil parmi la chaîne et la trame est de $111{,}1 \cdot 10^{-3}$ à $333{,}3 \cdot 10^{-3}$ kg/m (1 000 à 3 000 deniers), et la densité de chaque fil parmi la chaîne et la trame est de 10 à 20 bouts par 2,54 cm (epi (bout par pouce)).

【FIG. 1】

【FIG. 2】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4034138 A
- US 4720398 A

- JP 2012193480 B